# EUROPEAN PATENT APPLICATION

(11) **EP 1 519 209 A1**
(43) Date of publication of application: **30.03.2005**
(21) Application number: 04020790.4
(22) Date of filing: 01.09.2004
(51) Int. Cl.: G02B 7/02, G03B 21/14

(54) **System for correcting optical center linked with lens shift**

(30) Priority: 26.09.2003 JP 2003335088
(71) Applicant: NEC Viewtechnology, Ltd., Tokyo (JP)
(72) Inventor: Moriwaki, Daisuke, NEC Viewtechnology, Ltd., Minato-ku Tokyo (JP); Komatsu, Yoshiharu, NEC Viewtechnology, Ltd., Minato-ku Tokyo (JP)
(74) Representative: Glawe, Delfs, Moll & Partner

(57) **Abstract**

A system for correcting an optical center is provided with: a lens control unit for shifting a lens in vertical and horizontal directions; an offset detection unit for detecting a displacement of the optical center with respect to a screen on a basis of a magnitude of a shift of the lens effected by the lens control unit; a memory unit for storing in advance data on the centrally aligned location of the lens and also data on the positions of the optical center effected by lens shifts; and a correction unit for linking the displacement of the optical center detected by the offset detection unit with the data on the centrally aligned location of the lens and the data on the position of the optical center effected by the lens shift stored in the memory unit to correct the displacement of the optical center.

## Description

### BACKGROUND OF THE INVENTION

### 1. Field of the invention

The present invention relates to a system for geometrical correction and particularly to an optical-center correcting system for automatically correcting the position of an optical center through linkage with a lens shift.

### 2. Description of the Related Art

When it happens that the optical center is displaced from the center of the lens due to a lens shift, a conventional way of correcting geometry has required correcting the displacement of the optical center first and then correcting a distortion in the geometry, in order to properly make a distortion correction. In other words, the conventional method of correcting the geometry lacks a functional relation between the magnitudes of the lens shift and displacement of the optical center and consequently it has been difficult to predict what lens shift causes what displacement in the optical center. For this reason, when the optical center of the projection image deviates due to the lens shift, it has been required to make a correction of the optical center manually by the user him- or herself through a trial and error process using a guiding unit such as a slide bar.

As an example of prior art techniques, Japanese Patent Laid-open Publication No. 18502/2003 discloses a projection display device capable of projecting a high-quality picture in which the magnitude of the lens shift is detected corresponding to a desired lens-shift level of the projection lens and an optimum correction of unevenness is effected for the detected magnitude of the lens shift. This document, however, does not describe the technique of calculating the displacement of the optical center based on the magnitude of the lens shift and making a correction of the optical center.

### SUMMARY OF THE INVENTION

It is an object of the present invention to provide an optical-center correcting system for correcting an optical center through linkage with a lens shift in a geometry correction of a projector.

In one aspect of the present invention, a system for correcting an optical center linked with a lens shift in a geometry correction of a projector for projecting an image on a screen is provided with: a lens control unit for shifting a lens in vertical and horizontal directions; an offset detection unit for detecting a displacement of the optical center with respect to a screen on a basis of a magnitude of a shift of said lens effected by said lens control unit; a memory unit for storing in advance data on the centrally aligned location of said lens and also data on the positions of said optical center effected by lens shifts; and a correction unit for linking said displacement of the optical center detected by said offset detection unit with said the data on the centrally aligned location of said lens and the data on the position of said optical center effected by the lens shift stored in said memory unit to correct the displacement of said optical center.

As described above, the present invention allows automatically detecting the displacement of the optical center through linkage with the shift magnitude of the lens by predicting in advance the displacement of the optical center in dependence on a shift magnitude of the lens, thereby correcting a displacement of the optical center automatically on the basis of the detected displacement. As a result, it is feasible to move a screen image projected on a screen by shifting the lens in the vertical or horizontal direction without changing the position of the projector. Furthermore, while it is envisaged that the data on the position of the optical center and the data on the centrally aligned location of the lens (the reference location of the lens) vary to some extent with each projector, appropriate correction is feasible even if the variation exists, because these data can be stored in the projector or the like at the time of production.

The above and other objects, features and advantages of the present invention will become apparent from the following description with reference to the accompanying drawings, which illustrate examples of the present invention.

### BRIEF DESCRIPTION OF THE DRAWINGS

Fig. 1 is a block diagram illustrating the first embodiment of a system for correcting an optical center according to the present invention;
Fig. 2 is a block diagram of the projector in the first embodiment of the present invention;
Fig. 3 is a flow chart illustrating the processing operation of the system for correcting an optical center of the first embodiment of the present invention;
Fig. 4 is a block diagram illustrating second embodiment of a system for correcting an optical center according to the present invention;
Fig. 5 is a block diagram of the projector in the second embodiment of the present invention;
Fig. 6 is a flow chart illustrating the processing operation of the system for correcting an optical center of the second embodiment of the present invention; and
Fig. 7 and 8 are diagrams showing examples of curved screens.

### DESCRIPTION OF THE PREFERRED EMBODIMENTS

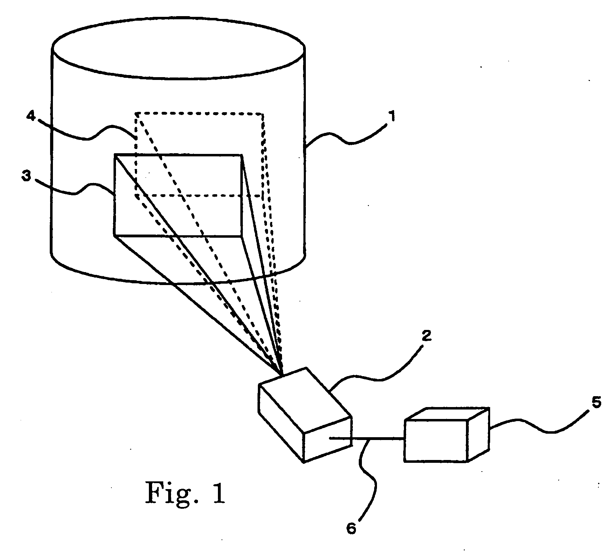

Explanation is next presented regarding a first embodiment of the present invention referring to Fig. 1 through Fig. 3.

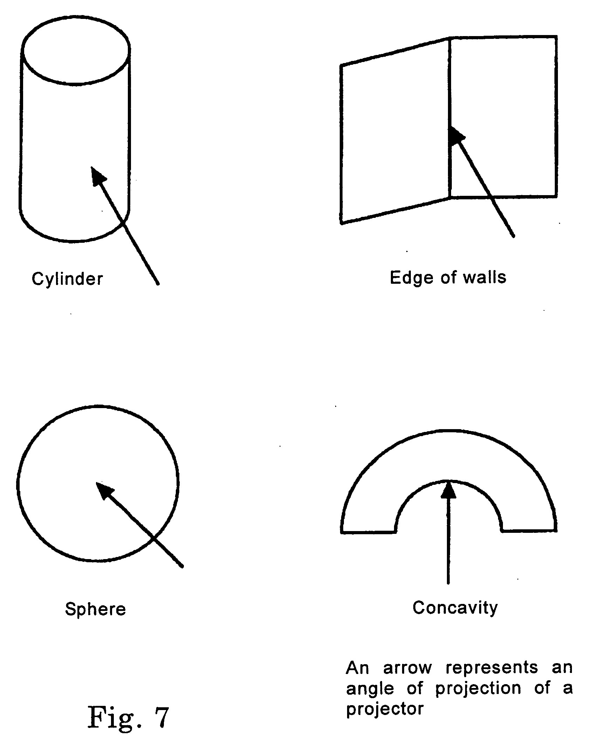

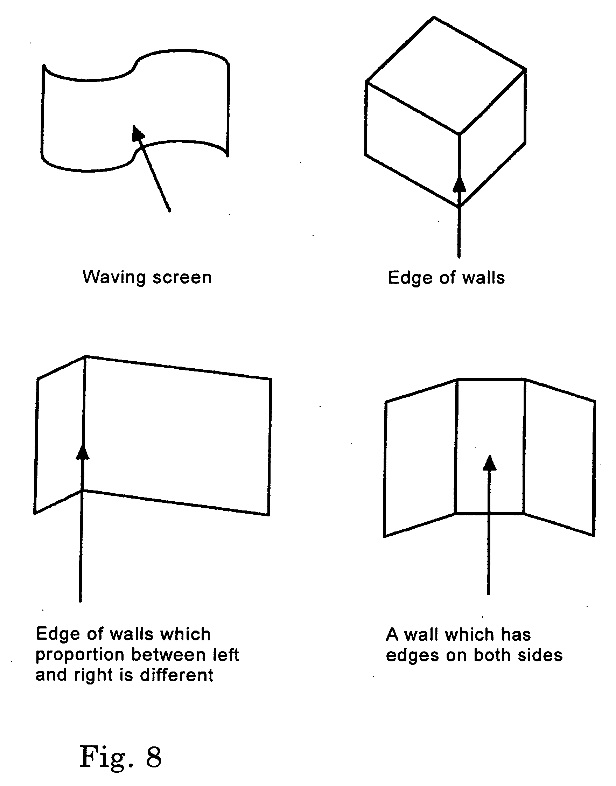

Fig. 1 is a block diagram of the optical-center correction system of the first embodiment according to the present invention. The optical-center correction system comprises curved screen 1 (or a screen that needs some extent of geometrical correction such as a spherical surface, a joining edge portion of walls and a curtain as shown in Fig. 7 and Fig. 8, other than a planar surface); projector 2 for projecting an image having the lens-shift function; and computer 5 for arithmetic processing (hereinafter referred to as PC). Projector 2 and PC 5 are connected through communication cable 6 having a capability of two-way communication, allowing exchange of information with each other.

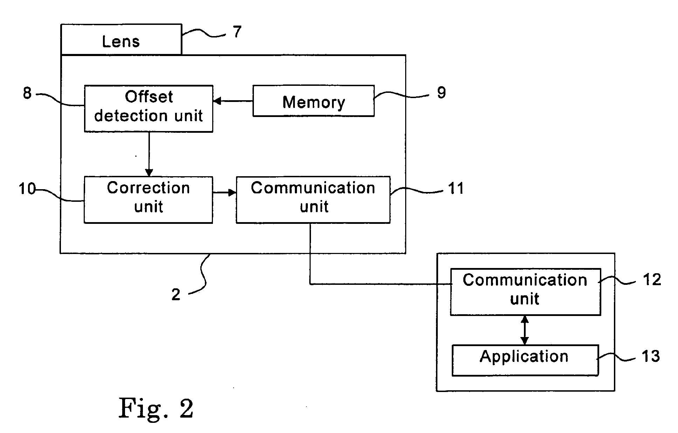

Fig. 2 is a block diagram of the projector. Projector 2 comprises lens 7, offset detection unit 8, memory 9, correction unit 10 and communication unit 11. PC 5 comprises communication unit 12 and application 13. Lens 7 is capable of making a shift in the vertical and horizontal directions through user's manipulation. Offset detection unit 8 detects the displacement of the optical center based on the magnitudes of the shifts of the lens 7 in the vertical and horizontal directions. Memory 9 stores the data required for the detection of the displacement of the optical center. Correction unit 10 acquires the displacement of the optical center from offset detection unit 8 and makes corrections of geometry. Communication unit 11 transmits the data on the displacement of the optical center to PC 5, which has a capability of the correction of geometry.

Communication unit 12 receives the data on the displacement of the optical center transmitted from communication unit 11 of projector 2. Application 13 has a capability of executing the geometry correction.

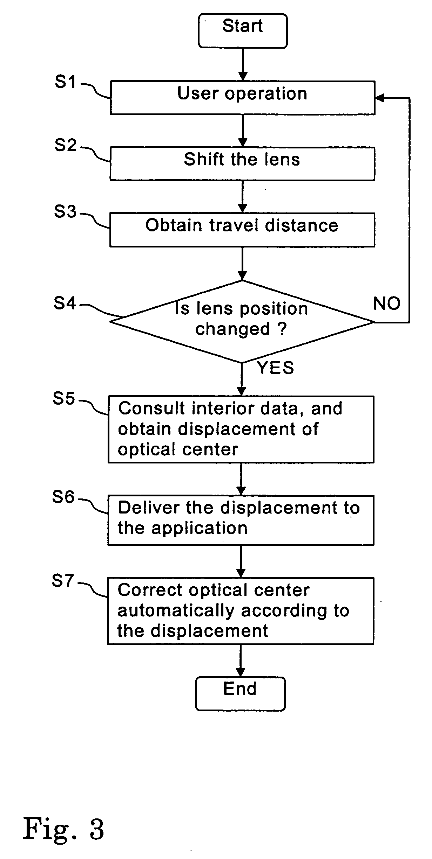

Explanation next regards the processing operation of the optical-center correcting system of the present invention with reference to the flow chart shown in Fig. 3.

First, the user makes necessary operations for the lens shift (Step S1). Next, lens 7 is shifted through user's operation (Step S2). Next, the travel distance of lens 7 is obtained from the difference between the original position and the position after the movement of lens 7 (Step S3).

Next, it is decided whether or not the position of lens 7 is changed (Step S4). If not (in step S4, the case of "NO"), the system waits ready until the user makes an operation. If it is decided that lens has moved (in step S4, the case of "YES"), the internal data of memory 9, which describe the relation between the travel distance of lens 7 and the displacement of the optical center, are consulted, whereby the displacement of the optical center is acquired on the basis of the travel distance of lens 7 (Step S5). The displacement of the optical center can also be acquired by prediction through computation.

The acquired displacement of the optical center is next delivered to the geometry-correcting system (Step S6). In the present embodiment, the acquired displacement of the optical center is delivered to application 13. Further, the optical center is automatically corrected depending on the displacement obtained in Step S5 (Step S7).

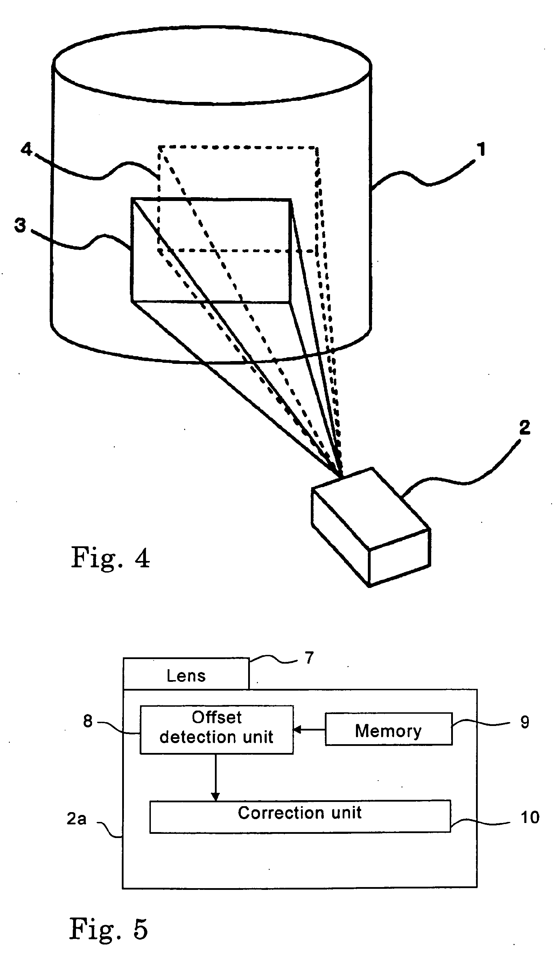

Explanation is next presented regarding a second embodiment of the present invention with reference to Fig. 4 through 6. In the optical-center correcting system of the present embodiment, exclusively projector 2 effects correcting the optical center. Fig. 4 is a block diagram of the optical-center correcting system of the second embodiment according to the present invention. Fig. 5 is a block diagram of the projector. In passing, constituent elements that are identical to constituent elements in Fig. 1 and Fig. 2 bear the same reference numerals.

Optical-center correcting system comprises curved screen 1 (cf. Fig. 7 and Fig. 8) and projector 2a as shown in Fig. 4. Projector 2a comprises lens 7, offset detection unit 8, memory 9 and correction unit 10 as shown in Fig. 5. Lens 7 is shiftable in any of the vertical and horizontal directions through user's manipulation. Offset detection unit 8 detects the displacement of the optical center on the basis of the shift of lens 7 in any of the vertical and horizontal directions. Memory 9 stores the data necessary for detecting the displacement of the optical center. Correction unit 10 acquires the displacement of the optical center from offset detection unit 8 and effects the geometry correction. Correction unit 10 has, in addition, a capability of executing the geometrical correction as application 13 illustrated in Fig. 2 has, as well.

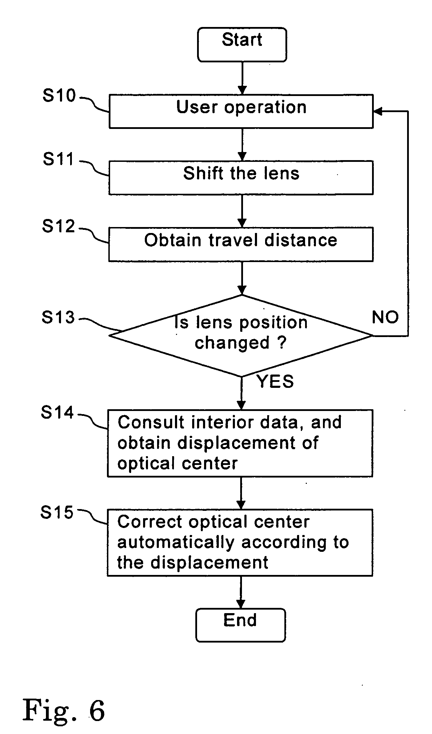

Referring to the flow chart shown in Fig. 6, processing operations of the optical-center correcting system of the second embodiment according to the present invention is next explained.

First, the user makes necessary operations for the lens shift (Step S10). Next, lens 7 is shifted through user's operation (Step S11). Next, the travel distance of lens 7 is obtained from the difference between the original position and the position after the movement of lens 7 (Step S12).

Next, it is decided whether or not the position of lens 7 is changed (Step S13). If not (in step S13, the case of "NO"), the system waits ready until the user makes any operation. If it is decided that lens has moved (in step S13, the case of "YES"), the internal data of memory 9, which describe the relation between the travel distance of lens 7 and the displacement of the optical center, are consulted, whereby the displacement of the optical center is acquired on the basis of the travel distance of lens 7 (Step S14). The displacement of the optical center can also be acquired by prediction by unit of computation. Next, the optical center is automatically corrected depending on the acquired displacement of the optical center (Step S15).

Although certain preferred embodiments of he present invention have been shown and described in detail, it should be understood that various changes and modifications may be made without departing from the sprit or scope of the appended claims.

## Claims

1. A system for correcting an optical center linked with a lens shift adapted for a geometry correction of a projector for projecting an image on a screen, comprising:
a lens control unit for shifting a lens in vertical and horizontal directions;
an offset detection unit for detecting a displacement of the optical center with respect to the screen on a basis of a magnitude of a shift of said lens effected by said lens control unit;
a memory unit for storing in advance data on a centrally aligned location of said lens and also data on positions of said optical center effected by lens shifts; and
a correction unit for linking said displacement of the optical center detected by said offset detection unit with said data on the centrally aligned location of said lens and data on the positions of said optical center effected by the lens shifts stored in said memory unit to correct the displacement of said optical center.

2. A system for correcting an optical center according to claim 1, wherein said correction unit corrects the displacement of said optical center by comparing said displacement of the optical center detected by said offset detection unit with said data on the centrally aligned location of said lens and the data on the positions of said optical center stored in said memory unit.

3. A system for correcting an optical center according to claim 1, further comprising a computer terminal connected with said projector through an use of a communication unit of said projector, wherein said correction unit transmits a comparison result obtained by comparing said displacement of the optical center detected by said offset detection unit with said data on the centrally aligned location of said lens and the data on the positions of said optical center stored in said memory unit, to said computer terminal.

4. A system for correcting an optical center according to claim 3, wherein said computer terminal acquires said displacement of said optical center by computing from said displacement of the optical center transmitted from said correction unit and detected by said offset detection unit and also said data on the centrally aligned location of said lens and the data on the positions of said optical center stored in said memory unit.

5. A system for correcting an optical center according to claim 4, wherein said correction unit transmits the acquired computation result to said projector, and
said lens control unit controls the position of said lens based on said computation result to correct said displacement of said optical center.

6. A system for correcting an optical center according to claim 5, wherein said computer terminal has a memory for storing in advance data on the centrally aligned location of said lens and the data on the position of said optical center to acquire said displacement of said optical center.
